Europäisches Patentamt

European Patent Office

Office européen des brevets

(11) Veröffentlichungsnummer: **0 449 088 A1**

## (12) EUROPÄISCHE PATENTANMELDUNG

(21) Anmeldenummer: **91104277.8**

(22) Anmeldetag: **20.03.91**

(51) Int. Cl.5: **H02G 3/06, H01B 17/30**

(30) Priorität: **26.03.90 DE 4009625**

(43) Veröffentlichungstag der Anmeldung:
**02.10.91 Patentblatt 91/40**

(84) Benannte Vertragsstaaten:
**DE FR GB**

(71) Anmelder: **ABB CEAG Licht- und
Stromversorgungstechnik GmbH
Senator-Schwarz-Ring 26
W-4770 Soest(DE)**

(72) Erfinder: **Faber, Karl
Adolf-Kolping-Strasse 17
W-6903 Neckargemünd(DE)**
Erfinder: **Deschner, Helmut
Allensteiner Strasse 1/1
W-6930 Eberbach(DE)**

(74) Vertreter: **Rupprecht, Klaus, Dipl.-Ing. et al
c/o ABB Patent GmbH, Patentabteilung,
Postfach 10 03 51
W-6800 Mannheim 1(DE)**

(54) **Kabeldurchführung.**

(57) Als Kabeldurchführung wird eine handelsübliche PG-Kabeldurchführung (10) verwendet, in dem die Buchse (11) mit Gießharz ausgegossen ist. Die Langflächendichtung (20), die jede handelsübliche Kabelverschraubung aufweist, wird so angeordnet, daß sie die Hutmutter (32) überragt und als Knickschutz dient.

*Fig. 2*

EP 0 449 088 A1

Die Erfindung betrifft eine Kabeldurchführung nach dem Oberbegriff des Anspruches 1.

Kabeldurchführungen sind vielfach bekannt geworden. Eine druckfeste Leitungsdurchführung ist aus der DE-OS 19 25 781 bekannt geworden. Dort ist eine Buchse dargestellt, die an ihrem einen Ende eine Führungsplatte aufweist, in der elektrische, teilweise abisolierte Leiter eingehängt und geführt sind. Der Bereich der elektrischen Leiter, der entisoliert ist, befindet sich Zwischen den Stirnflächen der Buchse, so daß dieser Bereich vollständig von Gießharz umgeben ist. Anstatt die Führungsplatte an einem Ende der Buchse vorzusehen, kann die Führungsplatte etwa in den mittleren Bereich eingebracht werden.

Eine Kabeldurchführung der eingangs genannten Art ist insbesondere aus der DE-OS 33 08 332 bekannt geworden.

Diese bekannten Kabeldurchführungen bestehen aus eigens hergestellten Bauteilen; Normbauteile, die für andere Zwecke eingesetzt werden können, sind bei den bekannten Kabeldurchführungen nicht verwendet worden.

Aufgabe der Erfindung ist es, die Herstellung einer explosionsgeschützt ausgebildeten Kabeldurchführung weiter zu vereinfachen.

Diese Aufgabe wird erfindungsgemäß gelöst durch die kennzeichnenden Merkmale des Anspruches 1.

Man benutzt als Grundelement eine handelsübliche PG-Verschraubung, die eine Buchse, eine in die Buchse eingesetzte Langflächendichtung und eine zur Halterung der Langflächendichtung und zur Erzeugung einer gewissen Dichtungskraft dienenden Hutmutter besteht. Dadurch, das die Buchse zur Aufnahme des absiolierten Bereiches der Leiter verwendet wird, und das die Langflächendichtung einfach durch umgekehrten Einsatz in die Hutmutter als Knickschutz dient, wird eine einfach herstellbare Kabeldurchführung erzeugt.

Weitere vorteilhafte Ausgestaltungen der Erfindung sind den Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen näher erläutert und beschrieben werden.

Es zeigt:

Figur 1     eine Längsschnittansicht durch eine handelsübliche PG-Kabelverschraubung,

Figur 2     eine Längsschnittansicht durch eine erfindungsgemäße Kabeldurchführung und

Figur 3     eine Einsicht in die Kabeldurchführung gemäß Figur 2, ohne Hutmutter und Langflächendichtung.

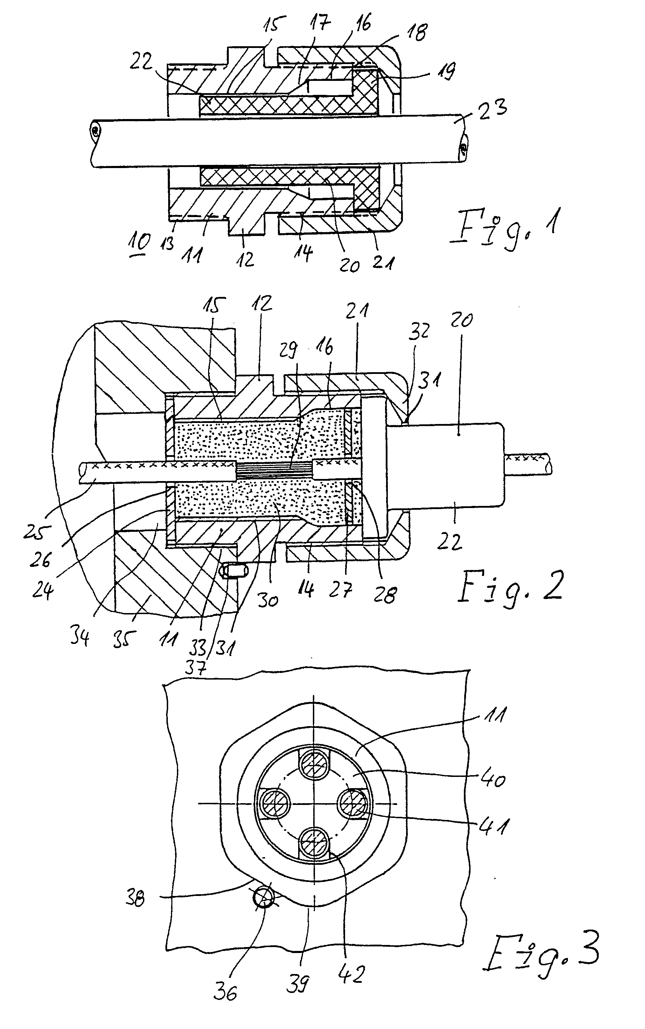

Die in Figur 1 in ihrer Gesamtheit mit 10 bezeichnete PG-Kabelverschraubung besitzt eine Buchse 11, auf deren Außenfläche ein Flanschbord 12 angeformt ist, dessen Außenquerschnitt ein Sechseck ist. Beidseitig zu dem Randbord besitzt die Buchse 11 Gewindestutzen 13, 14, deren Durchmesser gleich sind. Die Innenfläche der Buchse 11 besitzt einen ersten Abschnitt 15 mit geringerem Durchmesser und einem zweiten Abschnitt 16 mit größerem Durchmesser, wobei der Übergangsbereich 17 konisch ist. Gegen die Stirnfläche 18 der Buchse in dem Bereich, in dem der Abschnitt 16 angeordnet ist, legt sich der radiale Kragen 19 einer zylindrischen Langflächendichtung 20 an, die mittels einer Hutmutter 21 mit dem Kragen 19 gegen die Stirnfläche 18 gedrückt wird. Der zylindrische Abschnitt 22 der Langflächendichtung ragt ins Innere der Hülse, wobei der Außendurchmesser so gewählt ist, daß er ins Innere des ersten Abschnittes 15 hineinpaßt. Die Langflächendichtung 20 umgibt ein Kabel 23.

Diese Anordnung gemäß Figur 1 kann einfach für Kabeldurchführungen verwendet werden. Es sei hierzu Bezug genommen auf die Figur 2. Man erkennt in Figur 2 die Buchse 11 mit dem Flanschbord 12. An der Stirnfläche der Buchse 11, an die der Abschnitt 15 anschließt, ist eine Führungsplatte 24 aufgelegt, die eine der Anzahl der durchzuführenden Leiter 25 entsprechende Anzahl Öffnungen 26 aufweist. Die Ausführung nach Figur 2 besitzt nur eine Öffnung 26 für einen Leiter 25. Die Führungsplatte 24 dient demgemäß zur Führung, Halterung und Ausrichtung des Leiters 25.

In den Abschnitt 16 ist eine weitere Führungsplatte 27 eingelegt, die ebenfalls eine der Anzahl der durchzuführenden Leiter entsprechende Anzahl von Öffnungen 28 aufweist; im Beispiel nach Figur 2 ist lediglich eine Öffnung 28 vorgesehen. Im Bereich zwischen den beiden Führungsplatten 24 und 27 befindet sich ein abisolierter Bereich 29 des Leiters und nach Einfügen und Einsetzen des bzw. der Leiter ins Innere der Buchse 11 wird der Innenraum der Buchse 11 zwischen den Führungsplatten 24 und 27 mit Gießharz 30 ausgegossen. Daß bei der Ausführung gemäß Figur 2 die Führungsplatte 27 im Gießharz vollständig eingebettet ist, hat hierbei nichts wesentliches zu bedeuten. Der Abschnitt 15 besitzt ein Innengewinde 31, damit zwischen der Hülse 11 und dem Gießharz eine formschlüssige Krallenverbindung erzeugt ist; anstatt eines Innengewindes könnten auch Querrillen vorgesehen sein.

Die Langflächendichtung 20 wird mit ihrem zylindrischen Abschnitt 22 durch eine Öffnung 31 im Boden 32 der Hutmutter 21 hindurchgeschoben und dann die Hutmutter 21 mit der aus der Hutmutter herausragenden Langflächendichtung auf das Gewinde 14 der Buchse 11 aufgeschraubt.

Die Buchse 11 kann vor dem Aufschrauben der Hutmutter 21 oder auch danach in ein Innengewinde 33 in einer Bohrung 34 in einer Wandung eines druckfesten Gehäuses 35 eingeschraubt und ggf. darin verklebt werden. Zur Sicherung der Kabeldurchführung gemäß Figur 2 ist unmittelbar neben der Buchse und insbesondere neben dem Flanschrand 12 ein Zapfen 36 in eine Bohrung 37 am Gehäuse bzw. an der Gehäusewandung 35 eingesetzt. Der Zapfen 36 befindet sich dabei im Bereich einer geraden Umfangsfläche 38 des Sechskantprofils des Randbordes, damit ein Verdrehen unmöglich gemacht wird. Der gerade Bereich 38 hat einen geringeren Abstand vom Mittelpunkt der Buchse 11 als die abgerundeten Ecken 39 des Sechseckprofils.

Die Figur 3 zeigt die Buchse 11 ohne Hutmutter 21 vor dem Ausgießen. Die Führungsplatte 40 dient zum Führen und Haltern von vier Leitern, so daß sie vier am Umfang verteilte radial zum Umfang offene Öffnungen 42 aufweist. Nach Einsetzen der Führungsplatte 40 in den Abschnitt 16 der Buchse und Eindrehen der Buchse 11 in die Gewindebohrung 33 und nach Ausgießen mit Gießharz kann die Hutmutter 21 mit der Langflächendichtung 20 in der in Figur 2 dargestellten Weise eingesetzt bzw. aufgeschraubt werden.

**Patentansprüche**

1. Kabeldurchführung mit einer Buchse (11), die an ihren Enden Führungsplatten (26, 27; 40) für wenigstens einen zwischen den Führungsplatten abisolierten elektrischen Leiter (25) aufweist, und mit einer Gießharzfüllung (30) innerhalb der Buchse (11) zwischen den Führungsplatten (26, 27; 40), dadurch gekennzeichnet, daß die Buchse (11) Teil einer handelsüblichen Kabelverschraubung (10) mit Hutmutter (21) und Langflächendichtung (19, 20, 22) ist und daß die in der Kabelverschraubung vorgesehene Langflächendichtung (20) mit ihrem zylindrischen Abschnitt (22) aus einer Öffnung (21) im Boden- oder Dachabschnitt der Hutmutter herausragt und als Knickschutz dient.

2. Kabeldurchführung nach Anspruch 1, dadurch gekennzeichnet, daß die Innenfläche der Buchse (11) einen ersten Abschnitt (16) mit größerem und einen zweiten Abschnitt (15) mit kleinerem Innendurchmesser aufweist, wobei eine der Führungsplatten (27) in den ersten Abschnitt (16) eingefügt ist und dabei ihr Außendurchmesser dem Innendurchmesser des ersten Abschnittes (16) entspricht.

3. Kabeldurchführung nach Anspruch 2, dadurch gekennzeichnet, daß der zweite Abschnitt (15) mit quer verlaufenden Rillen versehen ist.

4. Kabelverschraubung nach Anspruch 3, dadurch gekennzeichnet, daß die Rillen durch ein Gewinde (31) gebildet sind.

5. Kabelverschraubung nach einem der vorherigen Ansprüche, dadurch gekennzeichnet, daß die andere Führungsplatte (24) auf die Stirnfläche der Buchse (11) aufgesetzt ist, in die der zweite Abschnitt (15) mit kleinerem Durchmesser einmündet.

6. Kabelverschraubung nach einem der vorherigen Ansprüche, dadurch gekennzeichnet, daß die Buchse (11) mit der Führungsplatte (24) in ein Gewindeloch (33) einer Gehäusewand (35) für ein druckfest gekapseltes Gehäuse einfügbar ist.

7. Kabelverschraubung nach Anspruch 6, dadurch gekennzeichnet, daß zwischen dem Außengewinde der Buchse (11) und dem Innengewinde (33) ein Klebemittel vorgesehen ist.

8. Kabelverschraubung nach Anspruch 7, dadurch gekennzeichnet, daß zur Verdrehsicherung zusätzlich in eine Bohrung (37) in der Gehäusewandung (35) ein Stift (36) eingeschlagen ist, der in den radialen Bereich zwischen der geraden Fläche (38) und einer Spitze (39) des Sechskantprofils des Flanschbordes (12) angeordnet ist.

*Fig. 1*

*Fig. 2*

*Fig. 3*

Europäisches
Patentamt

Nummer der Anmeldung

**EUROPÄISCHER
RECHERCHENBERICHT**

**EP 91 10 4277**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 428 903 (GRUNDFOS) <br> * Seite 8, Zeilen 11-21; Seite 10, Zeilen 11-34; Figur 2 * <br> – – – | 1,3 | H 02 G 3/06 <br> H 01 B 17/30 |
| D,A | DE-A-1 925 781 (BROWN BOVERI & CIE) <br> * Seite 3, Absatz 4; Figur 1 * <br> – – – | 1,2 | |
| A | DE-C-9 010 70 (SIEMENS) <br> * Seite 2, Zeile 42; Figur 1 * <br> – – – | 1 | |
| A | DE-C-4 477 44 (BRELA-SÄGEBAU) <br> * Seite 1, Zeilen 35-38; Figur 1 * <br> – – – – – | 1 | |

| | | | RECHERCHIERTE SACHGEBIETE (Int. Cl.5) |
|---|---|---|---|
| | | | H 02 G <br> F 16 L <br> H 01 B |

Der vorliegende Recherchenbericht wurde für alle Patentansprüche erstellt

| Recherchenort | Abschlußdatum der Recherche | Prüfer |
|---|---|---|
| Den Haag | 03 Juli 91 | BOLDER G.J.A. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus anderen Gründen angeführtes Dokument
 
& : Mitglied der gleichen Patentfamilie,
übereinstimmendes Dokument